# EUROPEAN PATENT APPLICATION

(11) **EP 0 854 311 A2**
(43) Date of publication of application: **22.07.1998**
(21) Application number: 98100879.0
(22) Date of filing: 20.01.1998
(51) Int. Cl.: F16K 24/06

(54) **Fluid check valve**

(30) Priority: 20.01.1997 IT MI970099
(71) Applicant: Premark International Holdings B.V., 3447 Woerden (NL)
(72) Inventor: Coraini, Rinaldo, 37040 Bevilacqua (Verona) (IT)
(74) Representative: Perani, Aurelio

(57) **Abstract**

Fluid check valve comprising a shutoff member (10) housed in a hollow body (1) whose internal cavity communicates with the exterior via a fluid inlet pipe (8), a fluid outlet pipe (9) and a relief pipe (5), the said shutoff member (10) being capable of closing the relief pipe (5) under the force of the fluid entering via the inlet pipe (8), and including a plurality of guide means (11) capable of sliding along the inner walls of the hollow body (1).

## Description

The present invention relates to a fluid check valve, and in particular to a check valve intended to be fitted to washing appliances connected to the water main, such as dishwashers, to prevent dirty water from flowing back into the main.

It is known that recent antipollution standards require dishwashers and other washing appliances connectable to the water main to be fitted with a check valve to prevent washing water from flowing back into the water main. Flowback can occur when the pressure of the water in the main accidentally falls below the pressure of the water in the washing appliance, causing the latter water to be sucked back into the water main. Known check valves generally comprise a spherical shutoff member which closes a relief pipe under the force of the water coming from the water main. As soon as the flow of water entering the valve is interrupted, the shutoff member falls under gravity and opens the relief pipe. With this arrangement dirty water cannot be sucked back into the main in the event of a pressure drop because any reduced pressure in the inlet pipe would be immediately relieved through the open relief pipe. However, known check valves have the disadvantage of being comparatively expensive because of the complexity of the process of manufacturing the spherical shutoff member. This shutoff member is also sensitive to variations in the incoming flow of water, during which it can float and consequently cause water to leak away through the relief pipe.

It is therefore an object of the present invention to provide a check valve that does not have these disadvantages, namely a valve having low manufacturing costs and virtually zero leaks through the relief pipe. This object is achieved with a valve having the principal features specified in the first claim.

Owing to its special shape and to the guides with which it is provided, the shutoff member of the check valve according to the present invention is more stable and simpler to manufacture than conventional spherical shutoff members. It is also lighter than known shutoff members, which means that the relief pipe is opened and closed faster than in known check valves.

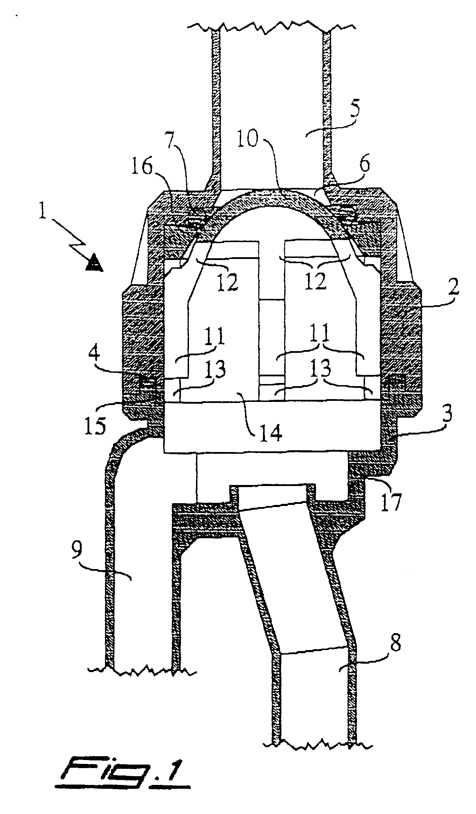

Other advantages and features of the check valve according to the present invention will be clear to those skilled in the art from the following detailed description of an embodiment thereof with reference to the accompanying drawings in which the single figure shows a longitudinal section of the valve in accordance with the present invention.

Referring to this figure, it will be seen that the check valve according to the present invention comprises, as in the prior art, a hollow body 1 whose internal cavity is basically cylindrical. It is subdivided into an upper part 2 and a lower part 3 and these are joined together by a plurality of fixing means, in particular bolts (not shown in the figure). Between the upper part 2 and the lower part 3 of the hollow body 1 a sealing ring 4 is preferably inserted to prevent leaks between the two parts. Fixed to the top of the upper part 2 of the hollow body 1 is a relief pipe 5 communicating with the interior of the hollow body and preferably integral with the latter. The other end of the relief pipe 5 (not shown in the figure) leads to an air intake preferably in the upper part of the washing chamber. Around the mouth 6 of the relief pipe 5 is a sealing ring 7 housed in a corresponding cylindrical seat formed at the top of the upper part 2 of the hollow body 1.

Fixed to the base of the lower part 3 of the hollow body 1 are the inlet pipe 8 connected to the water main and the delivery pipe 9 connected to the water circuit of the washing appliance containing the check valve in accordance with the present invention. Both pipes 8 and 9 communicate with the internal cavity of the hollow body 1 and are preferably made in one piece with the lower part 3 of the latter. Furthermore, the inlet end of the inlet pipe 8 in the hollow body 1 is preferably aligned with the mouth 6 of the relief pipe 5.

The shutoff member 10 housed inside the hollow body 1 takes the form, in the present embodiment, of a spherical cap with its concave surface facing towards the inlet pipe 8. The diameter of the circular base of this cap is greater than the diameter of the relief pipe 5 and smaller than the internal diameter of the hollow body 1. Conveniently fixed around this base is a plurality of guides 11 which prevent the shutoff member 10 from floating freely inside the hollow body 1. In the present embodiment the guides 11 consist of four generally rectangular arms arranged vertically in diametrically opposite positions beneath the shutoff member 10 in such a way that each arm is perpendicular to its neighbours. The internal upper corner of each arm 11 is fixed to the lower circular edge of the shutoff member 10 by a connecting member 12 of generally trapezoidal shape. The shutoff member 10, the arms 11 and the connecting members 12 are preferably all made in one piece.

The outer edges of the four arms 11 project conveniently from the perimeter of the shutoff member 10 to reach the cylindrical inner surface of the hollow body 1. The arms fit slidingly each in its own longitudinal slot 13 formed in a bush 14 housed coaxially in the upper part 2 of the hollow body 1. The bush 14 has an external diameter approximately equal to the internal diameter of the cavity of the hollow body 1 and is provided externally with an annular projection 15 inserted in a corresponding groove formed between the upper part 2 and the lower part 3 of the hollow body 1. This arrangement enables the bush 14 to be immobilized inside the hollow body 1 during the assembly of the valve according to the present invention. The upper edge of the bush 14 is preferably provided internally with another annular projection 16 to keep the sealing ring 7 in its seat.

The slots 13 in the bush 14 serve to limit the movements of the shutoff member 10 so that it can only move translationally along the longitudinal axis of the hollow body 1. The said rectilinear movement of the shutoff member 10 is therefore limited above by the sealing ring 7 positioned around the mouth 6 of the relief pipe 5 and beneath by a narrowing 17 of the base of the lower part 3 of the hollow body 1, which narrowing acts as a stop for the bottom edges of the arms 11.

When in use, the force of water flowing in through the inlet pipe 8 into the check valve according to the present invention lifts the shutoff member 10 and presses it against the sealing ring 7, thus closing the relief pipe 5. Precisely because of the fact that the shutoff member 10 is a spherical cap, the pressure of the incoming water is distributed uniformly over its internal surface so that it is held firmly against the sealing ring 7 even if the incoming flow changes in direction and/or strength. Because the relief pipe 5 is closed by the shutoff member 10, the water coming in through the inlet pipe 8 passes out through the delivery pipe 9.

As soon as the incoming flow of water from the pipe 8 is interrupted, e.g. because of a drop in pressure in the water main, the shutoff member 10, no longer being pressed against the sealing ring 7 by the pressure of water, immediately falls back under gravity to its lower rest position, thus opening the relief pipe 5. In this position the water which is present inside the water circuit of the washing appliance can no longer be sucked back along the delivery pipe 9, any pressure drops in the water main immediately being relieved via the relief pipe 5.

It will be obvious that in other embodiments of the check valve according to the present invention, the shutoff member 10 and/or the guides 11 may differ in form from those described and illustrated herein. For example, the shutoff member 10 may be conical or frustoconical.

Other variants and/or additions may be made by those skilled in the art to the embodiment described and illustrated herein while remaining within the scope of the invention.

## Claims

1. Fluid check valve comprising a shutoff member (10) housed in a hollow body (1) whose internal cavity communicates with the exterior via a fluid inlet pipe (8), a fluid outlet pipe (9) and a relief pipe (5), the said shutoff member (10) being capable of closing the relief pipe (5) under the force of the fluid entering via the inlet pipe (8), which valve is characterized in that this shutoff member (10) includes a plurality of guide means (11) capable of sliding along the inner walls of the hollow body (1).

2. Check valve according to the preceding claim, characterized in that the internal cavity of the hollow body (1) is generally cylindrical.

3. Check valve according to one of the preceding claims, characterized in that the check valve (10) comprises a concave surface facing towards the fluid inlet pipe (8).

4. Check valve according to the preceding claim, characterized in that the shutoff member (10) comprises a spherical cap whose base has a diameter greater than the diameter of the relief pipe (5) and smaller than the internal diameter of the hollow body (1).

5. Check valve according to one of the preceding claims, characterized in that the said guide means (11) of the shutoff member (10) comprise a plurality of arms having one edge in contact with the inner walls of the hollow body (1).

6. Check valve according to the preceding claim, characterized in that the said arms (11) are arranged vertically beneath the shutoff member (10) in diametrically opposite positions, each arm being perpendicular to its neighbours and projecting from the perimeter of the base of the shutoff member (10).

7. Check valve according to one of the preceding claims, characterized in that the internal upper corner of each arm (11) is fixed to the base of the shutoff member (10).

8. Check valve according to one of the preceding claims, characterized in that the shutoff member (10) and its guide means (11) are made in one piece.

9. Check valve according to one of the preceding claims, characterized in that the inner walls of the hollow body (1) have a plurality of guide means (13, 14) complementary to the guide means (11) of the shutoff member (10).

10. Check valve according to the preceding claim, characterized in that the said complementary guide means (13, 14) comprise a bush (14) inserted coaxially in the hollow body (1), the said bush comprising a plurality of longitudinal slots (13) capable of housing the guide means (11) of the shutoff member (10) in a sliding manner.

11. Check valve according to the preceding claim, characterized in that the bush (14) has an external annular projection (15) inserted in a corresponding groove formed in the inner walls of the hollow body (1).

12. Check valve according to one of the two previous claims, characterized in that the upper edge of the bush (14) is provided internally with an annular projection (16).

13. Check valve according to one of the preceding claims, characterized in that there is at least one sealing ring (7) positioned around the mouth (6) of the relief pipe (5).

14. Check valve according to one of the preceding claims, characterized in that the inlet end of the fluid inlet pipe (8) and the mouth (6) of the relief pipe (5) are aligned with each other.
